# EUROPEAN PATENT SPECIFICATION

(11) **EP 3 859 506 B1**
(45) Date of publication and mention of the grant of the patent: **13.12.2023**
(21) Application number: 19877173.5
(22) Date of filing: 18.10.2019
(51) Int. Cl.: G06F 3/06

(54) **NODE EXPANSION METHOD IN STORAGE SYSTEM AND STORAGE SYSTEM**
KNOTENEXPANSIONSVERFAHREN IN EINEM SPEICHERSYSTEM UND SPEICHERSYSTEM
PROCÉDÉ D'EXTENSION DE NOEUD DANS UN SYSTÈME DE STOCKAGE, ET SYSTÈME DE STOCKAGE

(30) Priority: 25.10.2018 CN 201811249893; 21.12.2018 CN 201811571426
(43) Date of publication of application: 04.08.2021
(73) Proprietor: Huawei Technologies Co., Ltd., Shenzhen Guangdong 518129 (CN)
(72) Inventor: XIAO, Jianlong, Shenzhen, Guangdong 518129 (CN); WANG, Feng, Shenzhen, Guangdong 518129 (CN); WANG, Qi, Shenzhen, Guangdong 518129 (CN); WANG, Chen, Shenzhen, Guangdong 518129 (CN); TAN, Chunhua, Shenzhen, Guangdong 518129 (CN)
(74) Representative: Gill Jennings & Every LLP
(86) International application number: PCT/CN2019/111888
(87) International publication number: WO 2020/083106

(56) References cited:
- US-A1- 2010 106 934
- "System, Method, and Service for Automated Capacity Expansion of a Data Deduplication Repository ED - Darl Kuhn", IP.COM, IP.COM INC., WEST HENRIETTA, NY, US, 23 June 2009 (2009-06-23), XP013132485, ISSN: 1533-0001
- "Optimized Deduplication Metadata Online Redistribution ED - Darl Kuhn", IP.COM, IP.COM INC., WEST HENRIETTA, NY, US, 15 July 2013 (2013-07-15), XP013158182, ISSN: 1533-0001

## Description

### TECHNICAL FIELD

This application relates to the storage field, and more specifically, to a node capacity expansion method in a storage system and a storage system.

### BACKGROUND

In a distributed storage system, a capacity of the storage system needs to be expanded if a free space of the storage system is insufficient. When a new node is added to the storage system, an original node migrates some partitions and data corresponding to the partitions to the new node. Data migration between storage nodes certainly consumes bandwidth.
US2010106934A1 provides partition management for a scalable, structured storage system.

### SUMMARY

This application provides a node capacity expansion method in a storage system and a storage system, to save bandwidth between storage nodes.

According to a first aspect, a node capacity expansion method in a storage system is provided according to appended claim 1.

According to the method provided in the first aspect, when the second node is added, a metadata partition subgroup obtained after splitting by the first node and metadata corresponding to the metadata partition subgroup are migrated to the second node. Because a data volume of the metadata is greatly less than a data volume of the data, compared with migrating the data to the second node in the prior art, this method saves bandwidth between nodes.

In addition, because the data partition group and the metadata partition group of the first node are configured, the metadata of the data corresponding to the configured data partition group is the subset of the metadata corresponding to the metadata partition group. In this case, even if the metadata partition group is split into at least two metadata partition subgroups after capacity expansion, it can still be ensured to some extent that the metadata of the data corresponding to the data partition group is a subset of metadata corresponding to any metadata partition subgroup. After one of the metadata partition subgroups and metadata corresponding to the metadata partition subgroup are migrated to the second node, the data corresponding to the data partition group is still described by metadata stored on a same node. This avoids modifying metadata on different nodes when data is modified especially when junk data collection is performed.

With reference to a first implementation of the first aspect, in a second implementation, the first node obtains a metadata partition group layout after capacity expansion and a metadata partition group layout before capacity expansion. The metadata partition group layout after capacity expansion includes a quantity of the metadata partition subgroups configured for each node in the storage system after the second node is added to the storage system, and a quantity of metadata partitions included in the metadata partition subgroup after the second node is added to the storage system. The metadata partition group layout before capacity expansion includes a quantity of the metadata partition groups configured for the first node before the second node is added to the storage system, and a quantity of metadata partitions included in the metadata partition groups before the second node is added to the storage system. The first node splits the metadata partition group into at least two metadata partition subgroups based on the metadata partition group layout after capacity expansion and the metadata partition group layout before capacity expansion.

With reference to any one of the foregoing implementations of the first aspect, in a third implementation, after the migration, the first node splits the data partition group into at least two data partition subgroups. Metadata of data corresponding to the data partition subgroup is a subset of metadata corresponding to the metadata partition subgroups. Splitting the data partition group into the data partition subgroups of a smaller granularity is to prepare for a next capacity expansion, so that the metadata of the data corresponding to the data partition subgroup is always the subset of the metadata corresponding to the metadata partition subgroups.

With reference to any one of the foregoing implementations of the first aspect, in a fourth implementation, when the second node is added to the storage system, the first node keeps the data partition group and the data corresponding to the data partition group still being stored on the first node. Because only metadata is migrated, data is not migrated, and a data volume of the metadata is usually far less than a data volume of the data, bandwidth between nodes is saved.

The metadata of the data corresponding to the data partition group is a subset of metadata corresponding to any one of the at least two metadata partition subgroups. In this way, it is ensured that the data corresponding to the data partition group is still described by metadata stored on a same node. This avoids modifying metadata on different nodes when data is modified especially when junk data collection is performed.

According to a second aspect, a node capacity expansion apparatus is provided. The node capacity expansion apparatus is adapted to implement the method provided in any one of the first aspect and the implementations of the first aspect.

According to a third aspect, a storage node is provided. The storage node is adapted to implement the method provided in any one of the first aspect and the implementations of the first aspect.

According to a fourth aspect, a storage system is provided according to appended claim 9.

In the storage system provided in the fourth aspect, although the data and the metadata of the data are stored on different nodes, because the data partition group and the metadata partition group of the nodes are configured in a same way as in the first aspect, metadata of data corresponding to any data partition group can still be stored on one node after the migration, and there is no need to obtain or modify the metadata on two nodes.

According to an example, a node capacity expansion method in a storage system is provided. The storage system includes one or more first nodes. Each first node stores data and metadata of the data. In addition, the first node includes at least two metadata partition groups and at least two data partition groups, and metadata corresponding to each metadata partition group is separately used to describe data corresponding to one of the data partition groups. The metadata partition groups and the data partition groups are configured for the first node, so that a quantity of metadata partitions included in the metadata partition groups is equal to a quantity of data partitions included in the data partition group. When a second node is added to the storage system, the first node migrates a first metadata partition group in the at least two metadata partition groups and metadata corresponding to the first metadata partition group to the second node. However, data corresponding to the at least two data partition groups is still stored on the first node.

### BRIEF DESCRIPTION OF DRAWINGS

FIG. 1 is a schematic diagram of a scenario to which the technical solutions in the embodiments of the present invention can be applied;
FIG. 2 is a schematic diagram of a storage unit according to an embodiment of the present invention;
FIG. 3 is a schematic diagram of a metadata partition group and a data partition group according to an embodiment of the present invention;
FIG. 4 is another schematic diagram of a metadata partition group and a data partition group according to an embodiment of the present invention;
FIG. 5 is a schematic diagram of a metadata partition layout before capacity expansion according to an embodiment of the present invention;
FIG. 6 is a schematic diagram of a metadata partition layout after capacity expansion according to an embodiment of the present invention;
FIG. 7 is a schematic flowchart of a node capacity expansion method according to an embodiment of the present invention;
FIG. 8 is a schematic diagram of a structure of a node capacity expansion apparatus according to an embodiment of the present invention; and
FIG. 9 is a schematic diagram of a structure of a storage node according to an embodiment of the present invention.

### DESCRIPTION OF EMBODIMENTS

In an embodiment of this application, metadata is migrated to a new node during capacity expansion, and data is still stored on an original node. In addition, through configuration, it is always ensured that metadata of data corresponding to a data partition group is a subset of metadata corresponding to a metadata partition group, so that data corresponding to one data partition group is described only by metadata stored on one node. This saves bandwidth. The following describes technical solutions in this application with reference to accompanying drawings.

The technical solutions in the embodiments of this application may be applied to various storage systems. The following describes the technical solutions in the embodiments of this application by using a distributed storage system as an example, but this is not limited in the embodiments of this application. In the distributed storage system, data is separately stored on a plurality of storage nodes, and the plurality of storage nodes share a storage load. This storage mode improves reliability, availability, and access efficiency of a system, and the system is easy to expand. A storage device is, for example, a storage server, or a combination of a storage controller and a storage medium.

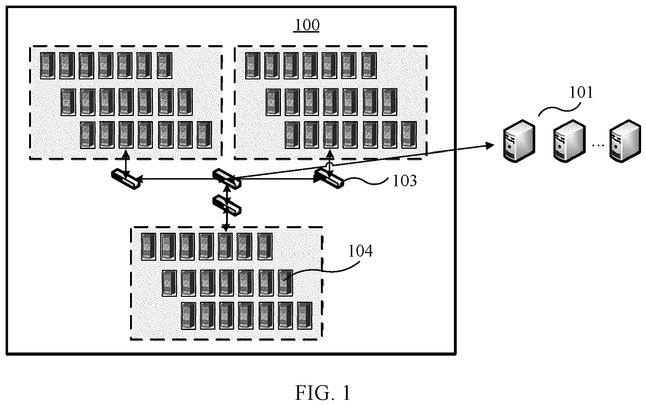

FIG. 1 is a schematic diagram of a scenario to which the technical solutions in the embodiments of this application can be applied. As shown in FIG. 1, a client server (client server) 101 communicates with a storage system 100. The storage system 100 includes a switch 103, a plurality of storage nodes (or "nodes") 104, and the like. The switch 103 is an optional device. Each storage node 104 may include a plurality of hard disks or other types of storage media (for example, a solid state disk or a shingled magnetic recording disk), and is adapted to store data. The following describes this embodiment of this application in four parts.

### 1. Data storage process

To ensure that the data is evenly stored on each storage node 104, a distributed hash table (Distributed Hash Table, DHT) mode is usually used for routing when a storage node is selected. However, this is not limited in this embodiment of this application. To be specific, in the technical solutions in the embodiments of this application, various possible routing modes in the storage system may be used. According to a distributed hash table mode, a hash ring is evenly divided into several parts, each part is referred to as a partition (partition), and each partition corresponds to a storage space of a specified size. It may be understood that a larger quantity of partitions indicates a smaller storage space corresponding to each partition, and a smaller quantity of partitions indicates a larger storage space corresponding to each partition. In an actual application, the quantity of partitions is usually relatively large (4096 partitions are used as an example in this embodiment). For ease of management, these partitions are divided into a plurality of partition groups, and each partition group includes a same quantity of partitions. If absolute equal division cannot be achieved, ensure that a quantity of partitions in each partition group is basically the same. For example, 4096 partitions are divided into 144 partition groups, where a partition group 0 includes partitions 0 to 27, a partition group 1 includes partitions 28 to 57, ..., and a partition group 143 includes partitions 4066 to 4095. A partition group has its own identifier, and the identifier is used to uniquely identify the partition group. Similarly, a partition also has its own identifier, and the identifier is used to uniquely identify the partition. An identifier may be a number, a character string, or a combination of a number and a character string. In this embodiment, each partition group corresponds to one storage node 104, and "correspond" means that all data that is of a same partition group and that is located by using a hash value is stored on a same storage node 104.

The client server 101 sends a write request to any storage node 104, where the write request carries to-be-written data and a virtual address of the data. The virtual address includes an identifier and an offset of a logical unit (Logical Unit, LU) into which the data is to be written, and the virtual address is an address visible to the client server 101. The storage node 104 that receives the write request performs a hash operation based on the virtual address of the data to obtain a hash value, and a target partition may be uniquely determined by using the hash value. After the target partition is determined, a partition group in which the target partition is located is also determined. According to a correspondence between a partition group and a storage node, the storage node that receives the write request may forward the write request to a storage node corresponding to the partition group. One partition group corresponds to one or more storage nodes. The corresponding storage node (referred to as a first storage node herein for distinguishing from another storage node 104) writes the write request into a cache of the corresponding storage node, and performs persistent storage when a condition is met.

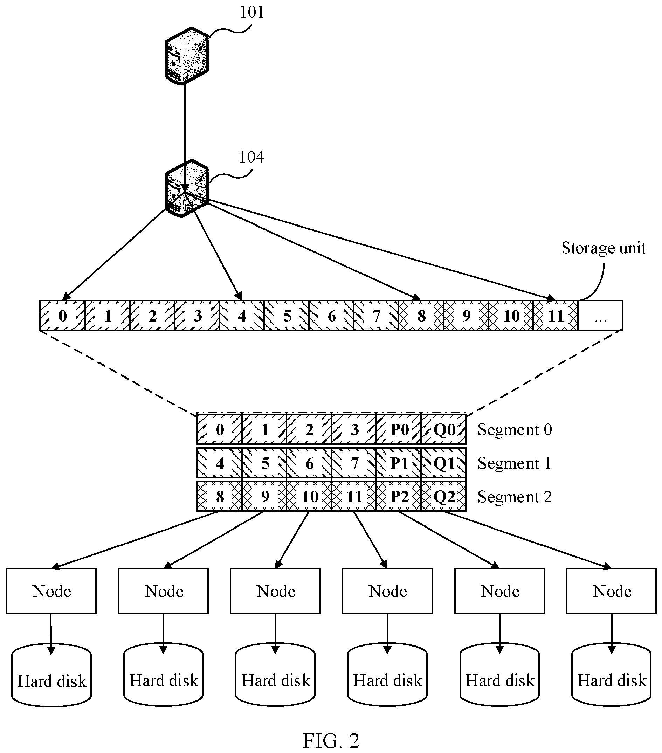

In this embodiment, each storage node includes at least one storage unit. The storage unit is a logical space, and an actual physical space is still provided by a plurality of storage nodes. Referring to FIG. 2, FIG. 2 is a schematic diagram of a structure of the storage unit according to this embodiment. The storage unit is a set including a plurality of logical blocks. A logical block is a space concept. For example, a size of the logical chunk is 4 MB, but is not limited to 4 MB. One storage node 104 (still using the first storage node as an example) uses or manages, in a form of a logical block, a storage space of the another storage node 104 in the storage system 100. Logical blocks on hard disks from different storage nodes 104 may form a logical block set. The storage node 104 then divides the logical block set into a data storage unit and a check storage unit based on a specified redundant array of independent disks (Redundant Array of Independent Disks, RAID) type. The logical block set that includes the data storage unit and the check storage unit is referred to as a storage unit. The data storage unit includes at least two logical blocks, adapted to store data allocation. The check storage unit includes at least one check logical block, adapted to store a check slice. The logical block set that includes the data storage unit and the check storage unit is referred to as a storage unit. It is assumed that one logical block is extracted from each of six storage nodes to form the logical block set, and then the first storage node groups the logical blocks in the logical block set based on the RAID type (RAID 6 is used as an example). For example, a logical block 1, a logical block 2, a logical block 3, and a logical block 4 form the data storage unit, and a logical block 5 and a logical block 6 form the check storage unit. It can be understood that, according to a redundancy protection mechanism of the RAID6, when any two data units or check units become invalid, an invalid unit may be reconstructed based on a remaining data unit or check unit.

When data in the cache of the first storage node reaches a specified threshold, the data may be sliced into a plurality of data slices based on the specified RAID type, and check slices are obtained through calculation. The data slices and the check slices are stored on the storage unit. The data slices and corresponding check slices form a stripe. One storage unit may store a plurality of stripes, and is not limited to the three stripes shown in FIG. 2. For example, when to-be-stored data in the first storage node reaches 32 KB (8 KB x 4), the data is sliced into four data slices, and each data slice is 8 KB. Then, two check slices are obtained through calculation, and each check slice is also 8 KB. The first storage node then sends each slice to a storage node on which the slice is located for persistent storage. Logically, the data is written into a storage unit of the first storage node. Physically, the data is finally still stored on a plurality of storage nodes. For each slice, an identifier of a storage unit in which the slice is located and a location of the slice located on the storage unit are logical addresses of the slice, and an actual address of the slice on the storage node is a physical address of the slice.

### 2. Metadata storage process

After data is stored on a storage node, to find the data at later time, description information of the data further needs to be stored. The description information describing the data is referred to as metadata. When receiving a read request, the storage node usually finds metadata of to-be-read data based on a virtual address carried in the read request, and further obtains the to-be-read data based on the metadata. The metadata includes but is not limited to a correspondence between a logical address and a physical address of each slice, and a correspondence between a virtual address of the data and a logical address of each slice included in the data. A set of logical addresses of all slices included in the data is a logical address of the data.

Similar to the data storage process, a partition in which the metadata is located is also determined based on a virtual address carried in a read request or a write request. Specifically, a hash operation is performed on the virtual address to obtain a hash value, and a target partition may be uniquely determined by using the hash value. Therefore, a target partition group in which the target partition is located is further determined, and then to-be-stored metadata is sent to a storage node (for example, a first storage node) corresponding to the target partition group. When the to-be-stored metadata in the first storage node reaches a specified threshold (for example, 32 KB), the metadata is sliced into four data slices, and then two check slices are obtained through calculation. Then, these slices are sent to a plurality of storage nodes.

In this embodiment, a partition of the data and a partition of the metadata are independent of each other. In other words, the data has its own partition mechanism, and the metadata also has its own partition mechanism. However, a total quantity of partitions of the data is the same as a total quantity of partitions of the metadata. For example, the total quantity of the partitions of the data is 4096, and the total quantity of the partitions of the metadata is also 4096. For ease of description, in this embodiment of the present invention, a partition corresponding to the data is referred to as a data partition, and a partition corresponding to the metadata is referred to as a metadata partition. A partition group corresponding to the data is referred to as a data partition group, and a partition group corresponding to the metadata is referred to as a metadata partition group. Because both the metadata partition and the data partition are determined based on the virtual address carried in the read request or the write request, metadata corresponding to one metadata partition is used to describe data corresponding to a data partition that has a same identifier as the metadata partition. For example, metadata corresponding to a metadata partition 1 is used to describe data corresponding to a data partition 1, metadata corresponding to a metadata partition 2 is used to describe data corresponding to a data partition 2, and metadata corresponding to a metadata partition N is used to describe data corresponding to a data partition N, where N is an integer greater than or equal to 2. Data and metadata of the data may be stored on a same storage node, or may be stored on different storage nodes.

After the metadata is stored, when receiving a read request, the storage node may learn a physical address of the to-be-read data by reading the metadata. Specifically, when any storage node 104 receives a read request sent by the client server 101, the node 104 performs hash calculation on a virtual address carried in the read request to obtain a hash value, to obtain a metadata partition corresponding to the hash value and a metadata partition group of the metadata partition. Assuming that a storage unit corresponding to the metadata partition group belongs to the first storage node, the storage node 104 that receives the read request forwards the read request to the first storage node. The first storage node reads metadata of the to-be-read data from the storage unit. The first storage node then obtains, from a plurality of storage nodes based on the metadata, slices forming the to-be-read data, aggregates the slices into the to-be-read data after verifying that the slices are correct, and returns the to-be-read data to the client server 101.

### 3. Capacity expansion

As more data is stored on the storage system 100, a storage space of the storage system 100 is gradually reduced. Therefore, a quantity of the storage nodes in the storage system 100 needs to be increased. This process is referred to as capacity expansion. After a new storage node (new node for short) is added to the storage system 100, the storage system 100 migrates partitions of old storage nodes (old node for short) and data corresponding to the partitions to the new node. For example, assuming that the storage system 100 originally has eight storage nodes, and has 16 storage nodes after capacity expansion, half of partitions and data corresponding to the partitions in the original eight storage nodes need to be migrated to the eight new storage nodes. To save bandwidth resources between the storage nodes, currently only metadata partitions and metadata corresponding to the metadata partitions are migrated, and data partitions are not migrated. After the metadata is migrated to the new storage node, because the metadata records a correspondence between a logical address and a physical address of the data, even if the client server 101 sends a read request to the new node, a location of the data on an original node may be found according to the correspondence to read the data. For example, if the metadata corresponding to the metadata partition 1 is migrated to the new node, when the client server 101 sends a read request to the new node to request to read the data corresponding to the data partition 1, although the data corresponding to the data partition 1 is not migrated to the new node, a physical address of the to-be-read data may still be found based on the metadata corresponding to the metadata partition 1, to read the data from the original node.

In addition, partitions and data of the partitions are migrated by partition group during node capacity expansion. If metadata corresponding to a metadata partition group is less than metadata used to describe data corresponding to a data partition group, a same storage unit is referenced by at least two metadata partition groups. This makes management inconvenient.

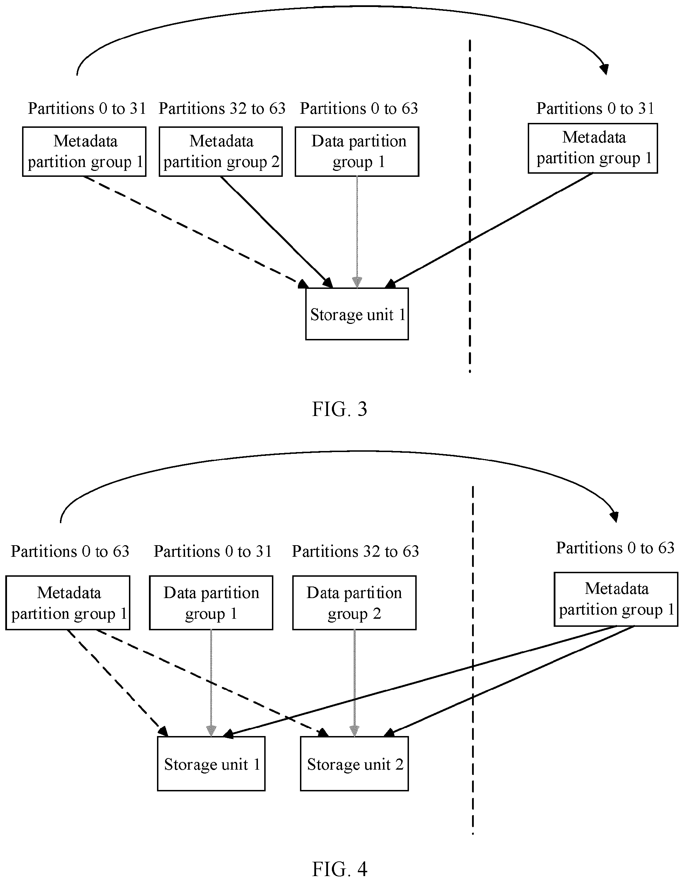

Generally, a quantity of partitions included in the metadata partition group is usually less than a quantity of partitions included in the data partition group. Referring to FIG. 3, each metadata partition group in FIG. 3 includes 32 partitions, and each data partition group includes 64 partitions. For example, a data partition group 1 includes partitions 0 to 63. Data corresponding to the partitions 0 to 63 is stored on a storage unit 1, a metadata partition group 1 includes the partitions 0 to 31, and a metadata partition group 2 includes the partitions 32 to 63. It can be learned that all the partitions included in the metadata partition group 1 and the metadata partition group 2 are used to describe the data on the storage unit 1. Before capacity expansion, the metadata partition group 1 and the metadata partition group 2 separately point to the storage unit 1. After the new node is added, it is assumed that the metadata partition group 1 on the original node and metadata corresponding to the metadata partition group 1 are migrated to the new storage node. After the migration, the metadata partition group 1 no longer exists on the original node, and a point relationship of the metadata partition group 1 is deleted (indicated by a dotted arrow). The metadata partition group 1 on the new node points to the storage unit 1. In addition, the metadata partition group 2 on the original node is not migrated, and still points to the storage unit 1. In this case, after capacity expansion, the storage unit 1 is referenced by both the metadata partition group 2 on the original node and the metadata partition group 1 on the new node. When data on the storage unit 1 changes, corresponding metadata on the two storage nodes (the original node and the new node) needs to be searched for and modified. This increases management complexity, especially complexity of a junk data collection operation.

To resolve the foregoing problem, in this embodiment, the quantity of the partitions included in the metadata partition group is set to be greater than or equal to the quantity of the partitions included in the data partition group. In other words, metadata corresponding to one metadata partition group is greater than or equal to metadata used to describe data corresponding to one data partition group. For example, each metadata partition group includes 64 partitions, and each data partition group includes 32 partitions. As shown in FIG. 4, a metadata partition group 1 includes partitions 0 to 63, a data partition group 1 includes partitions 0 to 31, and a data partition group 2 includes partitions 32 to 63. Data corresponding to the data partition group 1 is stored on a storage unit 1, and data corresponding to the data partition group 2 is stored on a storage unit 2. Before capacity expansion, the metadata partition group 1 on the original node separately points to the storage unit 1 and the storage unit 2. After capacity expansion, the metadata partition group 1 and metadata corresponding to the metadata partition group 1 are migrated to the new storage node. In this case, the metadata partition group 1 on the new node separately points to the storage unit 1 and the storage unit 2. Because the metadata partition group 1 does not exist on the original node, a point relationship of the metadata partition group 1 is deleted (indicated by a dotted arrow). It can be learned that the storage unit 1 and the storage unit 2 each are referenced by only one metadata partition group. This reduces management complexity.

Therefore, in this embodiment, before capacity expansion, the metadata partition group and the data partition group are configured, so that the quantity of the partitions included in the metadata partition group is set to be greater than the quantity of the partitions included in the data partition group. After capacity expansion, the metadata partition group on the original node is split into at least two metadata partition subgroups, and then at least one metadata partition subgroup and metadata corresponding to the at least one metadata partition subgroup are migrated to the new node. Then, the data partition group on the original node is split into at least two data partition subgroups, so that a quantity of partitions included in the metadata partition subgroups is set to be greater than or equal to a quantity of partitions included in the data partition subgroup, to prepare for next capacity expansion.

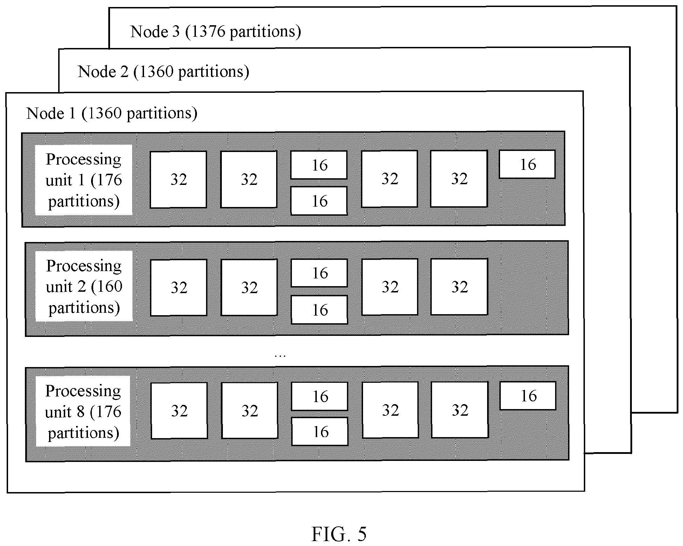

The following uses a specific example to describe the process of capacity expansion. Referring to FIG. 5, FIG. 5 is a diagram of distribution of metadata partition groups of each storage node before capacity expansion.

In this embodiment, a quantity of partition groups allocated to each storage node may be preset. When the storage node includes a plurality of processing units, to evenly distribute read and write requests on the processing units, in this embodiment of the present invention, each processing unit may be set to correspond to a specific quantity of partition groups, where the processing unit is a CPU on the node, as shown in Table 1:

**Table 1**

| Quantity of storage nodes | Quantity of processing units | Quantity of partition groups |
|---|---|---|
| 3 | 24 | 144 |
| 4 | 32 | 192 |
| 5 | 40 | 240 |
| 6 | 48 | 288 |
| 7 | 56 | 336 |
| 8 | 64 | 384 |
| 9 | 72 | 432 |
| 10 | 80 | 480 |
| 11 | 88 | 528 |
| 12 | 96 | 576 |
| 13 | 104 | 624 |
| 14 | 112 | 672 |
| 15 | 120 | 720 |

The table 1 describes a relationship between the nodes and the processing unit of the nodes, and a relationship between the nodes and the partition groups. For example, if each node has eight processing units, and six partition groups are allocated to each processing unit, a quantity of partition groups allocated to each node is 48. Assuming that the storage system 100 has three storage nodes before capacity expansion, a quantity of partition groups in the storage system 100 is 144. According to the foregoing description, a total quantity of partitions is configured when the storage system 100 is initialized. For example, the total quantity of partitions is 4096. To evenly distribute the 4096 partitions in the 144 partition groups, each partition group needs to have 4096/144=28.44 partitions. However, the quantity of partitions included in each partition group needs to be an integer and 2 to the power of N, where N is an integer greater than or equal to 0. Therefore, the 4096 partitions cannot be absolutely evenly distributed in the 144 partition groups. It may be determined that 28.44 is less than 32 (2 to the power of 5) and greater than 16 (2 to power of 4). Therefore, X first partition groups in the 144 partition groups each include 32 partitions, and Y second partition groups each include 16 partitions. X and Y meet the following equations: 32X+16Y=4096, and X+Y=144.

X=112 and Y=32 are obtained through calculation by using the foregoing two equations. This means that there are 112 first partition groups and 32 second partition groups in the 144 partition groups, where each first partition group includes 32 partitions and each second partition group includes 16 partitions. Then, a quantity (112/(3x8)=4, ..., or 16) of the first partition groups configured for each processing unit is calculated based on a total quantity of the first partition groups and a total quantity of the processing units, and a quantity (32/(3×8)=1, ..., or 8) of the second partition groups configured for each processing unit is calculated based on a total quantity of the second partition groups and the total quantity of the processing units. Therefore, it can be learned that at least four first partition groups and two second partition groups are configured for each processing unit, and the remaining eight second partitions are evenly distributed on three nodes as much as possible (as shown in FIG. 5).

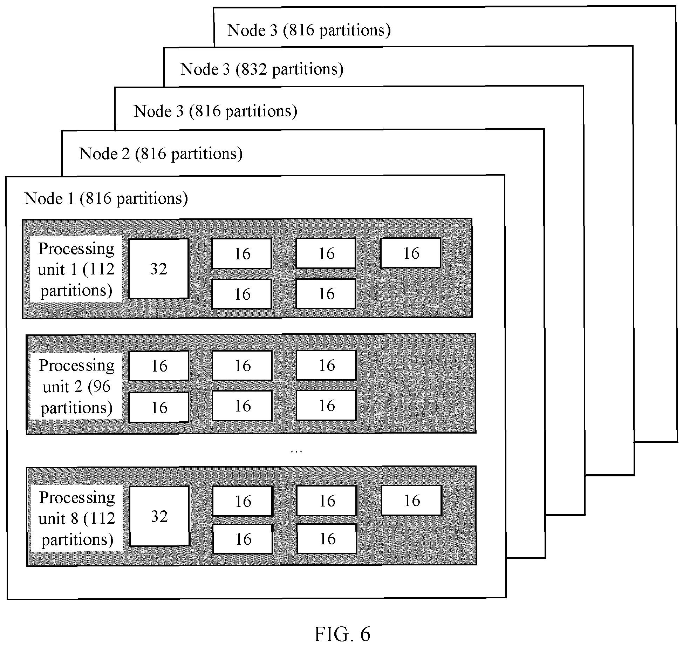

Referring to FIG. 6, FIG. 6 is a diagram of distribution of metadata partition groups of each storage node after capacity expansion. Assuming that two new storage nodes are added to the storage system 100, the storage system 100 has five storage nodes in this case. According to the table 1, the five storage nodes have 40 processing units in total, and six partition groups are configured for each processing unit. Therefore, the five storage nodes have 240 partition groups in total. The total quantity of partitions is 4096. To evenly distribute the 4096 partitions in the 240 partition groups, each partition group needs to have 4096/240=17.07 partitions. However, the quantity of partitions included in each partition group needs to be an integer and 2 to the power of N, where N is an integer greater than or equal to 0. Therefore, the 4096 partitions cannot be absolutely evenly distributed in the 240 partition groups. It may be determined that 17.07 is less than 32 (2 to the power of 5) and greater than 16 (2 to power of 4). Therefore, X first partition groups in the 240 partition groups each include 32 partitions, and Y second partition groups each include 16 partitions. X and Y meet the following equations: 32X+16Y=4096, and X+Y=240.

X=16 and Y=224 are obtained through calculation by using the foregoing two equations. This means that there are 16 first partition groups and 224 second partition groups in the 240 partition groups, where each first partition group includes 32 partitions and each second partition group includes 16 partitions. Then, a quantity (16/(5x8)=0, ..., or 16) of the first partition groups configured for each processing unit is calculated based on a total quantity of the first partition groups and a total quantity of the processing units, and a quantity (224/(5x8)=5, ..., or 24) of the second partition groups configured for each processing unit is calculated based on a total quantity of the second partition groups and the total quantity of the processing units. Therefore, it can be learned that one first partition group is configured for only 16 processing units, at least five second partition groups are configured for each processing unit, and the remaining 24 second partitions are evenly distributed on five nodes as much as possible (as shown in FIG. 6).

According to a schematic diagram of a partition layout of the three nodes before capacity expansion and a schematic diagram of a partition layout of the five nodes after capacity expansion, some of the first partition groups on the three nodes before capacity expansion may be split into two second partition groups, and then according to the distribution of partitions of each node shown in FIG. 6, some first and second partition groups are migrated from the three nodes to a node 4 and a node 5. For example, as shown in FIG. 5, the storage system 100 has 112 first partition groups before capacity expansion, and has 16 first partition groups after capacity expansion. Therefore, 96 first partition groups in the 112 first partition groups need to be split. The 96 first partition groups are split into 192 second partition groups. Therefore, there are 16 first partition groups and 224 second partitions in total on the three nodes after splitting. However, each node further separately migrates some first partition groups and some second partition groups to the node 4 and the node 5. Using a processing unit 1 of a node 1 as an example, as shown in FIG. 5, the processing unit 1 before capacity expansion is configured with four first partition groups and three second partition groups, and as shown in FIG. 5, one first partition group and five partition groups are configured for the processing unit 1 after expansion. This indicates that three first partition groups in the processing unit 1 need to be migrated, or need to be migrated out after being split into a plurality of second partition groups. How many of the three first partition groups are directly migrated to the new nodes, and how many of the three first partition groups are migrated to the new nodes after splitting are not limited in this embodiment, as long as the distribution of the partitions shown in FIG. 6 is met after migration. Migration and splitting are performed on the processing units of the other nodes in the same way.

In the foregoing example, the three storage nodes before capacity expansion first split some of the first partition groups into second partition groups and then migrate the second partition groups to the new nodes. In another implementation, the three storage nodes may first migrate some of the first partition groups to the new nodes and then split the first partition groups. In this way, the distribution of the partitions shown in FIG. 6 can also be achieved.

It should be noted that the foregoing description and the example in FIG. 5 are for the metadata partition groups. However, for the data partition groups, a quantity of data partitions included in each data partition group needs to be less than a quantity of metadata partitions included in each metadata partition group. Therefore, after migration, the data partition groups need to be split, and a quantity of partitions included in data partition subgroups obtained after splitting needs to be less than a quantity of metadata partitions included in metadata partition subgroups. Splitting is performed, so that metadata corresponding to a current metadata partition group always includes metadata used to describe data corresponding to a current data partition group. In the foregoing example, some metadata partition groups each include 32 metadata partitions, and some metadata partition groups each include 16 metadata partitions. Therefore, a quantity of data partition groups included in data partition subgroups obtained after splitting may be 16, 8, 4, or 2. The value cannot exceed 16.

### 4. Junk data collection

When there is a relatively large amount of junk data in the storage system 100, junk data collection may be started. In this embodiment, junk data collection is performed based on storage units. One storage unit is selected as an object for junk data collection, valid data on the storage unit is migrated to a new storage unit, and then a storage space occupied by the original storage unit is released. The selected storage unit needs to meet a specific condition. For example, junk data included on the storage unit reaches a first specified threshold, the storage unit is a storage unit that includes the largest amount of junk data and that is in the plurality of storage units, valid data included on the storage unit is less than a second specified threshold, or the storage unit is a storage unit that includes least valid data and that is in the plurality of storage units. For ease of description, in this embodiment, the selected storage unit on which junk data collection is performed is referred to as a first storage unit or the storage unit 1.

Referring to FIG. 3, an example in which junk data collection is performed on the storage unit 1 is used to describe a common junk data collection method. The junk data collection is performed by a storage node (also using the first storage node as an example) to which the storage unit 1 belongs. The first storage node reads valid data from the storage unit 1, and writes the valid data into a new storage unit. Then, the first storage node marks all data on the storage unit 1 as invalid, and sends a deletion request to a storage node on which each slice is located, to delete the slice. Finally, the first storage node further needs to modify metadata used to describe the data on the storage unit 1. It can be learned from FIG. 3 that both metadata corresponding to the metadata partition group 2 and metadata corresponding to the metadata partition group 1 are the metadata used to describe data on the storage unit 1, and the metadata partition group 2 and the metadata partition group 1 are separately located in different storage nodes. Therefore, the first storage node needs to separately modify the metadata in the two storage nodes. In a modification process, a plurality of read requests and write requests are generated between the nodes, and this severely consumes bandwidth resources between the nodes.

Referring to FIG. 4, a junk data collection method in this embodiment of the present invention is described by using an example in which junk data collection is performed on the storage unit 2. The junk data collection is performed by a storage node (using a second storage node as an example) to which the storage unit 2 belongs. The second storage node reads valid data from the storage unit 2, and writes the valid data into a new storage unit. Then, the second storage node marks all data on the storage unit 2 as invalid, and sends a deletion request to a storage node on which each slice is located, to delete the slice. Finally, the second storage node further needs to modify metadata used to describe the data on the storage unit 2. It can be learned from FIG. 4 that the storage unit 2 is referenced only by the metadata partition group 1, in other words, only metadata corresponding to the metadata partition group 1 is used to describe the data on the storage unit 2. Therefore, the second storage node only needs to send a request to the storage node on which the metadata partition group 1 is located, to modify the metadata. Compared with the example 1, because the second storage node only needs to modify metadata on one storage node, bandwidth resources between nodes are greatly saved.

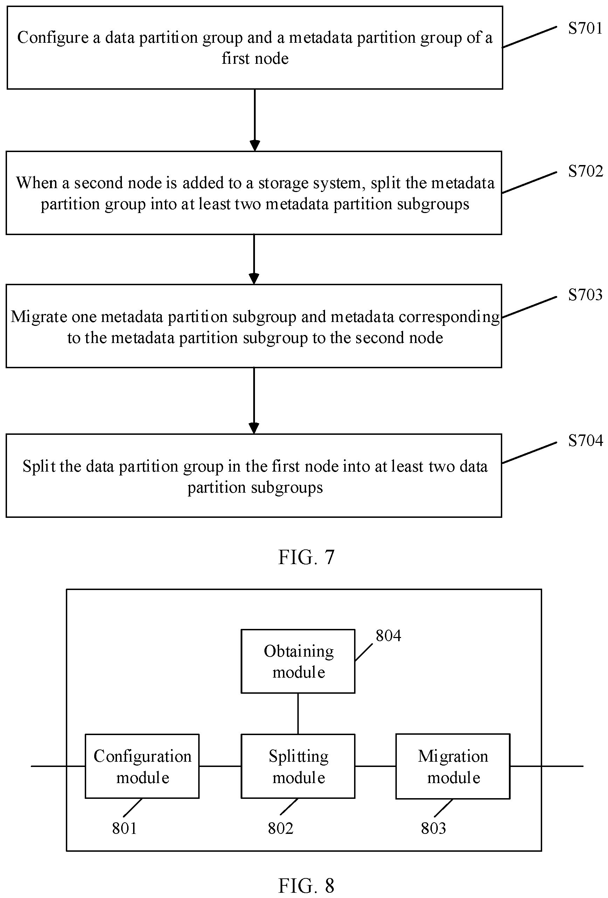

The following describes, with reference to a flowchart, a node capacity expansion method provided in this embodiment. Referring to FIG. 7, FIG. 7 is a flowchart of the node capacity expansion method. The method is applied to the storage system shown in FIG. 1, and the storage system includes a plurality of first nodes. The first node is a node that exists in the storage system before capacity expansion. For details, refer to the node 104 shown in FIG. 1 or FIG. 2. Each first node may perform the node capacity expansion method according to the steps shown in FIG. 7.

S701: Configure a data partition group and a metadata partition group of a first node. The data partition group includes a plurality of data partitions, and the metadata partition group includes a plurality of metadata partitions. Metadata of data corresponding to the configured data partition group is a subset of metadata corresponding to the metadata partition group. The subset herein has two meanings. One is that the metadata corresponding to the metadata partition group includes metadata used to describe the data corresponding to the data partition group. The other one is that a quantity of the metadata partitions included in the metadata partition group is greater than a quantity of the data partitions included in the data partition group. For example, the data partition group includes M data partitions: a data partition 1, a data partition 2, ..., and a data partition M. The metadata partition group includes N metadata partitions, where N is greater than M, and the metadata partitions are a metadata partition 1, a metadata partition 2, ..., a metadata partition M, ..., and a metadata partition N. According to the foregoing description, metadata corresponding to the metadata partition 1 is used to describe data corresponding to the data partition 1, metadata corresponding to the metadata partition 2 is used to describe data corresponding to the data partition 2, and metadata corresponding to the metadata partition M is used to describe data corresponding to the data partition M. Therefore, the metadata partition group includes all metadata used to describe data corresponding to the M data partitions. In addition, the metadata partition group further includes metadata used to describe data corresponding to another data partition group.

The first node described in S701 is the original node described in the capacity expansion part. In addition, it should be noted that first node may include one or more data partition groups. Similarly, the first node may include one or more metadata partition groups.

S702: When a second node is added to the storage system, split the metadata partition group into at least two metadata partition subgroups. When the first node includes one metadata partition group, this metadata partition group needs to be split into at least two metadata partition subgroups. When the first node includes a plurality of metadata partition groups, it is possible that only some metadata partition groups need to be split, and the remaining metadata partition groups continue to maintain original metadata partitions. Which metadata partition groups need to be split and how to split the metadata partition groups may be determined based on a metadata partition group layout after capacity expansion and a metadata partition group layout before capacity expansion. The metadata partition group layout after capacity expansion includes a quantity of the metadata partition subgroups configured for each node in the storage system after the second node is added to the storage system, and a quantity of metadata partitions included in the metadata partition subgroup after the second node is added to the storage system. The metadata partition group layout before capacity expansion includes a quantity of the metadata partition groups configured for the first node before the second node is added to the storage system, and a quantity of metadata partitions included in the metadata partition groups before the second node is added to the storage system. For specific implementation, refer to descriptions related to FIG. 5 and FIG. 6 in the capacity expansion part.

In actual implementation, splitting refers to changing a mapping relationship. Specifically, before splitting, there is a mapping relationship between an identifier of an original metadata partition group and an identifier of each metadata partition included in the original metadata partition group. After splitting, identifiers of at least two metadata partition subgroups are added, the mapping relationship between the identifier of the metadata partition included in the original metadata partition group and the identifier of the original metadata partition group is deleted, and a mapping relationship between identifiers of some metadata partitions included in the original metadata partition group and an identifier of one of the metadata partition subgroups and a mapping relationship between identifiers of another part of metadata partitions included in the original metadata partition group and an identifier of another metadata partition subgroup are established.

S703: Migrate one metadata partition subgroup and metadata corresponding to the metadata partition subgroup to the second node. The second node is the new node described in the capacity expansion part.

Migrating a partition group refers to changing a homing relationship. Specifically, migrating the metadata partition subgroup to the second node refers to modifying a correspondence between the metadata partition subgroup and the first node to a correspondence between the metadata partition subgroup and the second node. Metadata migration refers to actual movement of data. Specifically, migrating the metadata corresponding to the metadata partition subgroup to the second node refers to copying the metadata to the second node and deleting the metadata reserved in the first node.

The data partition group and the metadata partition group of the first node are configured in S701, so that metadata of data corresponding to the configured data partition group is a subset of metadata corresponding to the metadata partition group. Therefore, even if the metadata partition group is split into at least two metadata partition subgroups, the metadata of the data corresponding to the data partition group is still a subset of metadata corresponding to one of the metadata partition subgroups. In this case, after one of the metadata partition subgroups and the metadata corresponding to the metadata partition subgroup are migrated to the second node, the data corresponding to the data partition group is still described by metadata stored on one node. This avoids modifying metadata on different nodes when data is modified especially when junk data collection is performed.

To ensure that during next capacity expansion, the metadata of the data corresponding to the data partition group is still a subset of metadata corresponding to a metadata partition subgroup, S704 may be further performed after S703: Split the data partition group in the first node into at least two data partition subgroups, where metadata of data corresponding to the data partition subgroup is a subset of the metadata corresponding to the metadata partition subgroup. A definition of splitting herein is the same as that of splitting in S702.

In the node capacity expansion method provided in FIG. 7, data and metadata of the data are stored on a same node. However, in another scenario, the data and the metadata of the data are stored on different nodes. For a specific node, although the node may also include a data partition group and a metadata partition group, metadata corresponding to the metadata partition group may not be metadata of data corresponding to the data partition group, but metadata of data stored on another node. In this scenario, each first node still needs to configure a data partition group and a metadata partition group that are on this node, and a quantity of metadata partitions included in the configured metadata partition group is greater than a quantity of data partitions included in the data partition group. After the second node is added to the storage system, each first node splits the metadata partition group according to the description in S702, and migrates one metadata partition subgroup obtained after splitting to the second node. Because each first node performs such configuration on a data partition group and a metadata partition group of the first node, after migration, data corresponding to one data partition group is described by metadata stored on a same node. In a specific example, the first node stores data, and metadata of the data is stored on a third node. In this case, the first node configures a data partition group corresponding to the data, and the third node configures a metadata partition group corresponding to the metadata. After configuration, metadata of the data corresponding to the data partition group is a subset of metadata corresponding to the configured metadata partition group. When the second node is added to the storage system, the third node then splits the metadata partition group into at least two metadata partition subgroups, and migrates a first metadata partition subgroup in the at least two metadata partition subgroups and metadata corresponding to the first metadata partition subgroup to the second node.

In addition, in the node capacity expansion method provided in FIG. 7, the quantity of the data partitions included in the data partition group is less than the quantity of the metadata partitions included in the metadata partition group. In another scenario, the quantity of the data partitions included in the data partition group is equal to the quantity of the metadata partitions included in the metadata partition group. When the quantity of the data partitions included in the data partition group is equal to the quantity of the metadata partitions included in the metadata partition group, if the second node is added to the storage system, the metadata partition group does not need to be split, but some metadata partition groups in the plurality of metadata partition groups in the first node and metadata corresponding to this part of metadata partition groups are directly migrated to the second node. Similarly, there may be two cases for this scenario. Case 1: If data and metadata of the data are stored on a same node, for each first node, it is ensured that metadata corresponding to a metadata partition group only includes metadata of data corresponding to a data partition group in the node. Case 2: If the data and the metadata of the data are stored on different nodes, a quantity of metadata partitions included in the metadata partition group needs to be set to be equal to a quantity of data partitions included in the data partition group for each first node. In either the case 1 or the case 2, it is not necessary to split the metadata partition group, and only some of the metadata partition groups in a plurality of metadata partition groups in the node and metadata corresponding to this part of metadata partition groups are migrated to the second node. However, this scenario is not applicable to a node that includes only one metadata partition group.

In addition, in various scenarios to which the node capacity expansion method provided in this embodiment is applicable, neither the data partition group nor the data corresponding to the data partition group needs to be migrated to the second node. If the second node receives a read request, the second node may find a physical address of to-be-read data based on metadata stored on the second node, to read the data. Because a data volume of the metadata is greatly less than a data volume of the data to avoid migrating the data to the second node, bandwidth between the nodes can be greatly saved.

An embodiment further provides a node capacity expansion apparatus. As shown in FIG. 8, FIG. 8 is a schematic diagram of a structure of the node capacity expansion apparatus. The apparatus includes a configuration module 801, a splitting module 802, and a migration module 803.

The configuration module 801 is adapted to configure a data partition group and a metadata partition group of a first node in a storage system. The data partition group includes a plurality of data partitions, the metadata partition group includes a plurality of metadata partitions, and metadata of data corresponding to the data partition group is a subset of metadata corresponding to the metadata partition group. Specifically, refer to the description of S701 shown in FIG. 7.

The splitting module 802 is adapted to, when a second node is added to the storage system, split the metadata partition group into at least two metadata partition subgroups. Specifically, refer to the description of S702 shown in FIG. 7 and the descriptions related to FIG. 5 and FIG. 6 in the capacity expansion part.

The migration module 803 is adapted to migrate one metadata partition subgroup in the at least two metadata partition subgroups and metadata corresponding to the metadata partition subgroup to the second node. Specifically, refer to the description of S703 shown in FIG. 7.

Optionally, the apparatus further includes an obtaining module 804, adapted to obtain a metadata partition group layout after capacity expansion and a metadata partition group layout before capacity expansion. The metadata partition group layout after capacity expansion includes a quantity of the metadata partition subgroups configured for each node in the storage system after the second node is added to the storage system, and a quantity of metadata partitions included in the metadata partition subgroup after the second node is added to the storage system. The metadata partition group layout before capacity expansion includes a quantity of the metadata partition groups configured for the first node before the second node is added to the storage system, and a quantity of metadata partitions included in the metadata partition groups before the second node is added to the storage system. The splitting module 802 is specifically adapted to split the metadata partition group into at least two metadata partition subgroups based on the metadata partition group layout after capacity expansion and the metadata partition group layout before capacity expansion.

Optionally, the splitting module 802 is further adapted to: after migrating at least one metadata partition subgroup and metadata corresponding to the at least one metadata partition subgroup to the second node, split the data partition group into at least two data partition subgroups. Metadata of data corresponding to the data partition subgroup is a subset of metadata corresponding to the metadata partition subgroup.

Optionally, the configuration module 801 is further adapted to: when the second node is added to the storage system, keep the data corresponding to the data partition group still being stored on the first node.

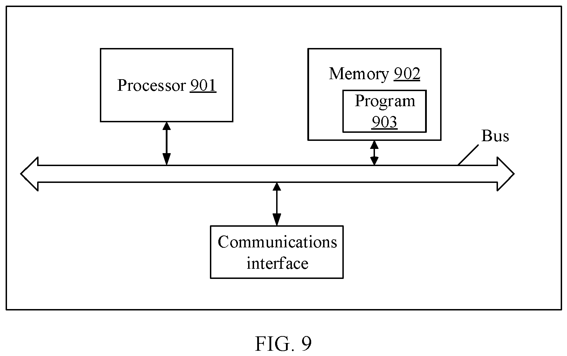

An embodiment further provides a storage node. The storage node may be a storage array or a server. When the storage node is a storage array, the storage node includes a storage controller and a storage medium. For a structure of the storage controller, refer to a schematic diagram of a structure in FIG. 9. When the storage node is a server, refer to the schematic diagram of the structure in FIG. 9. Therefore, regardless of a form of the storage node, the storage node includes at least the processor 901 and the memory 902. The memory 902 stores a program 903. The processor 901, the memory 902, and a communications interface are connected to and communicate with each other by using a system bus.

The processor 901 is a single-core or multi-core central processing unit, or an application-specific integrated circuit, or may be configured as one or more integrated circuits for implementing this embodiment of the present invention. The memory 902 may be a high-speed RAM memory, or may also be a non-volatile memory (non-volatile memory), for example, at least one hard disk memory. The memory 902 is adapted to store a computer-executable instruction. Specifically, the computer-executable instruction may include the program 903. When the storage node runs, the processor 901 runs the program 903 to perform the method procedure of S701 to S704 shown in FIG. 7.

Functions of the configuration module 801, the splitting module 802, the migration module 803, and the obtaining module 804 that are shown in FIG. 8 may be executed by the processor 901 by running the program 903, or may be independently executed by the processor 901.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedure or functions according to the embodiments of this application are all or partially generated. The computer may be a general-purpose computer, a special-purpose computer, a computer network, or other programmable apparatuses. The computer instructions may be stored on a computer-readable storage medium, or transmitted from one computer-readable storage medium to another computer-readable storage medium. For example, the computer instructions may be transmitted from a website, computer, storage node, or data center to another website, computer, storage node, or data center in a wired (for example, a coaxial cable, an optical fiber, or a digital subscriber line (DSL)) or wireless (for example, infrared, radio, or microwave) manner. The computer-readable storage medium may be any usable medium accessible to a computer, or a data storage device, such as a storage node or a data center, integrating one or more usable mediums. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

It should be understood that, in the embodiments of this application, the term "first" and the like are merely intended to indicate objects, but do not indicate a sequence of corresponding objects.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed systems, apparatuses, and methods may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communications connections may be implemented by using some interfaces. The indirect couplings or communications connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit.

When the functions are implemented in the form of a software functional unit and sold or used as an independent product, the functions may be stored on a computer-readable storage medium. Based on such an understanding, the technical solutions of this application essentially, or the part contributing to the prior art, or some of the technical solutions may be implemented in a form of a software product. The software product is stored on a storage medium, and includes several instructions for instructing a computer device (which may be a personal computer, a storage node, a network device, or the like) to perform all or some of the steps of the methods described in the embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

## Claims

1. A node capacity expansion method in a storage system, wherein the storage system comprises a first node, and the method comprises:
configuring (S701) a data partition group and a metadata partition group of the first node, wherein the data partition group comprises a plurality of data partitions, the metadata partition group comprises a plurality of metadata partitions,
wherein metadata of data corresponding to the data partition group is a subset of metadata corresponding to the metadata partition group, wherein the method further comprises:
when a second node is added to the storage system (S702), splitting the metadata partition group into at least two metadata partition subgroups; and
migrating (S703) a first metadata partition subgroup in the at least two metadata partition subgroups and metadata corresponding to the first metadata partition subgroup to the second node, wherein the metadata of the data corresponding to the data partition group is a subset of metadata corresponding to any one of the at least two metadata partition subgroups.

2. The method according to claim 1, wherein before the splitting the metadata partition group into at least two metadata partition subgroups, the method further comprises:
obtaining a metadata partition group layout after capacity expansion and a metadata partition group layout before capacity expansion, wherein
the metadata partition group layout after capacity expansion comprises a quantity of the metadata partition subgroups configured for each node in the storage system after the second node is added to the storage system, and a quantity of metadata partitions comprised in the metadata partition subgroup after the second node is added to the storage system, and
the metadata partition group layout before capacity expansion comprises a quantity of the metadata partition groups configured for the first node before the second node is added to the storage system, and a quantity of metadata partitions comprised in the metadata partition groups before the second node is added to the storage system; and
the splitting the metadata partition group into at least two metadata partition subgroups comprises:
splitting the metadata partition group based on metadata partition group layout after capacity expansion and the metadata partition group layout before capacity expansion, wherein there are at least two metadata partition subgroups after splitting.

3. The method according to claim 1 or 2, wherein after the migrating a first metadata partition subgroup and metadata corresponding to the first metadata partition subgroup to the second node, the method further comprises:
splitting the data partition group into at least two data partition subgroups, wherein metadata of data corresponding to the data partition subgroup is a subset of metadata corresponding to any one of the at least two metadata partition subgroups.

4. The method according to any one of claims 1 to 3, further comprising:
after the second node is added to the storage system, keeping the data corresponding to the data partition group still being stored on the first node.

5. A node capacity expansion apparatus, wherein the apparatus is located in a storage system and comprises:
a configuration module (801), adapted to configure a data partition group and a metadata partition group of a first node in the storage system, wherein the data partition group comprises a plurality of data partitions, the metadata partition group comprises a plurality of metadata partitions, wherein metadata of data corresponding to the data partition group is a subset of metadata corresponding to the metadata partition group; wherein the apparatus further comprises:
a splitting module (802), adapted to, when a second node is added to the storage system, split the metadata partition group into at least two metadata partition subgroups; and
a migration module (803), adapted to migrate a first metadata partition subgroup in the at least two metadata partition subgroups and metadata corresponding to the first metadata partition subgroup to the second node, wherein the metadata of the data corresponding to the data partition group is a subset of metadata corresponding to any one of the at least two metadata partition subgroups.

6. The apparatus according to claim 5, further comprising an obtaining module (804), wherein
the obtaining module is adapted to obtain a metadata partition group layout after capacity expansion and a metadata partition group layout before capacity expansion, wherein the metadata partition group layout after capacity expansion comprises a quantity of the metadata partition subgroups configured for each node in the storage system after the second node is added to the storage system, and a quantity of metadata partitions comprised in the metadata partition subgroup after the second node is added to the storage system, and the metadata partition group layout before capacity expansion comprises a quantity of the metadata partition groups configured for the first node before the second node is added to the storage system, and a quantity of metadata partitions comprised in the metadata partition groups before the second node is added to the storage system; and
the splitting module is specifically adapted to split the metadata partition group based on the metadata partition group layout after capacity expansion and the metadata partition group layout before capacity expansion, and there are at least two metadata partition subgroups after splitting.

7. The apparatus according to claim 5 or 6, wherein the splitting module is further adapted to: after the first metadata partition subgroup and the metadata corresponding to the first metadata partition subgroup are migrated to the second node, split the data partition group into at least two data partition subgroups, wherein metadata of data corresponding to the data partition subgroup is a subset of metadata corresponding to any one of the at least two metadata partition subgroups.

8. The apparatus according to any one of claims 5 to 7, wherein the configuration module is further adapted to: after the second node is added to the storage system, keep the data corresponding to the data partition group still being stored on the first node.

9. A storage system, comprising a first node and the node expansion capacity apparatus according to any of claims 5 to 8.

## Patentansprüche

1. Knotenkapazitätserweiterungsverfahren in einem Speichersystem, wobei das Speichersystem einen ersten Knoten umfasst und das Verfahren Folgendes umfasst:
Konfigurieren (S701) einer Datenpartitionsgruppe und einer Metadatenpartitionsgruppe des ersten Knotens, wobei die Datenpartitionsgruppe eine Vielzahl von Datenpartitionen umfasst, die Metadatenpartitionsgruppe eine Vielzahl von Metadatenpartitionen umfasst, wobei Metadaten von Daten, die der Datenpartitionsgruppe entsprechen, ein Teilsatz von Metadaten sind, die der Metadatenpartitionsgruppe entsprechen, wobei das Verfahren ferner Folgendes umfasst:
wenn ein zweiter Knoten zum Speichersystem (S702) hinzugefügt wird, Aufteilen der Metadatenpartitionsgruppe in mindestens zwei Metadatenpartitionsuntergruppen; und
Migrieren (S703) einer ersten Metadatenpartitionsuntergruppe in den mindestens zwei Metadatenpartitionsuntergruppen und Metadaten, die der ersten Metadatenpartitionsuntergruppe entsprechen, zum zweiten Knoten, wobei die Metadaten der Daten, die der Datenpartitionsgruppe entsprechen, ein Teilsatz von Metadaten sind, die einer der mindestens zwei Metadatenpartitionsuntergruppen entsprechen.

2. Verfahren nach Anspruch 1, wobei das Verfahren vor dem Aufteilen der Metadatenpartitionsgruppe in mindestens zwei Metadatenpartitionsuntergruppen ferner Folgendes umfasst:
Erlangen eines Metadatenpartitionsgruppen-Layouts nach Kapazitätserweiterung und eines Metadatenpartitionsgruppen-Layouts vor Kapazitätserweiterung, wobei
das Metadatenpartitionsgruppen-Layout nach Kapazitätserweiterung eine Menge der Metadatenpartitionsuntergruppen, die für jeden Knoten im Speichersystem konfiguriert werden, nachdem der zweite Knoten zum Speichersystem hinzugefügt wurde, und eine Menge von Metadatenpartitionen umfasst, die in der Metadatenpartitionsuntergruppe enthalten sind, nachdem der zweite Knoten dem Speichersystem hinzugefügt wurde, und
das Metadatenpartitionsgruppen-Layout vor Kapazitätserweiterung eine Menge der Metadatenpartitionsuntergruppen, die für jeden Knoten im Speichersystem konfiguriert wurden, bevor der zweite Knoten zum Speichersystem hinzugefügt wird, und eine Menge von Metadatenpartitionen umfasst, die in den Metadatenpartitionsgruppen enthalten sind, bevor der zweite Knoten zum Speichersystem hinzugefügt wird; und
das Aufteilen der Metadatenpartitionsgruppe in mindestens zwei Metadatenpartitionsuntergruppen Folgendes umfasst:
Aufteilen der Metadatenpartitionsgruppe basierend auf dem Metadatenpartitionsgruppen-Layout nach Kapazitätserweiterung und dem Metadatenpartitionsgruppen-Layout vor Kapazitätserweiterung, wobei es nach der Aufteilung mindestens zwei Metadatenpartitionsuntergruppen gibt.

3. Verfahren nach Anspruch 1 oder 2, wobei das Verfahren nach dem Migrieren einer ersten Metadatenpartitionsuntergruppe und von Metadaten, die der ersten Metadatenpartitionsuntergruppe entsprechen, zum zweiten Knoten ferner Folgendes umfasst:
Aufteilen der Datenpartitionsgruppe in mindestens zwei Datenpartitionsuntergruppen, wobei Metadaten von Daten, die der Datenpartitionsuntergruppe entsprechen, ein Teilsatz von Metadaten sind, die einer der mindestens zwei Metadatenpartitionsuntergruppen entsprechen.

4. Verfahren nach einem der Ansprüche 1 bis 3, ferner umfassend: nachdem der zweite Knoten zum Speichersystem hinzugefügt wurde, Gespeicherthalten der der Datenpartitionsgruppe entsprechenden Daten weiterhin auf dem ersten Knoten.

5. Knotenkapazitätserweiterungsvorrichtung, wobei sich die Vorrichtung in einem Speichersystem befindet und Folgendes umfasst:
ein Konfigurationsmodul (801), das dazu ausgelegt ist, eine Datenpartitionsgruppe und eine Metadatenpartitionsgruppe eines ersten Knotens im Speichersystem zu konfigurieren, wobei die Datenpartitionsgruppe eine Vielzahl von Datenpartitionen umfasst, die Metadatenpartitionsgruppe eine Vielzahl von Metadatenpartitionen umfasst, wobei Metadaten von Daten, die der Datenpartitionsgruppe entsprechen, ein Teilsatz von Metadaten sind, die der Metadatenpartitionsgruppe entsprechen; wobei die Vorrichtung ferner Folgendes umfasst:
ein Aufteilungsmodul (802), das dazu ausgelegt ist, die Metadatenpartitionsgruppe in mindestens zwei Metadatenpartitionsuntergruppen aufzuteilen, wenn ein zweiter Knoten zum Speichersystem hinzugefügt wird; und
ein Migrationsmodul (803), das dazu ausgelegt ist, eine erste Metadatenpartitionsuntergruppe in den mindestens zwei Metadatenpartitionsuntergruppen und Metadaten, die der ersten Metadatenpartitionsuntergruppe entsprechen, zum zweiten Knoten zu migrieren, wobei die Metadaten der Daten, die der Datenpartitionsgruppe entsprechen, ein Teilsatz von Metadaten sind, die einer der mindestens zwei Metadatenpartitionsuntergruppen entsprechen.

6. Vorrichtung nach Anspruch 5, ferner umfassend ein Erlangungsmodul (804), wobei
das Erlangungsmodul dazu ausgelegt ist, ein Metadatenpartitionsgruppen-Layout nach Kapazitätserweiterung und ein Metadatenpartitionsgruppen-Layout vor Kapazitätserweiterung zu erlangen, wobei das Metadatenpartitionsgruppen-Layout nach Kapazitätserweiterung eine Menge der Metadatenpartitionsuntergruppen, die für jeden Knoten im Speichersystem konfiguriert sind, nachdem der zweite Knoten zum Speichersystem hinzugefügt wurde, und eine Menge von Metadatenpartitionen umfasst, die in der Metadatenpartitionsuntergruppe enthalten sind, nachdem der zweite Knoten zum Speichersystem hinzugefügt wurde, und das Layout der Metadatenpartitionsgruppe vor Kapazitätserweiterung eine Menge der Metadatenpartitiongruppen, die für den ersten Knoten konfiguriert sind, bevor der zweite Knoten dem Speichersystem hinzugefügt wird, und eine Menge von Metadatenpartitionen umfasst, die in den Metadatenpartitionsgruppen enthalten sind, bevor der zweite Knoten dem Speichersystem hinzugefügt wird; und
das Aufteilungsmodul speziell dazu ausgelegt ist, die Metadatenpartitionsgruppe basierend auf dem Metadatenpartitionsgruppen-Layout nach Kapazitätserweiterung und dem Metadatenpartitionsgruppen-Layout vor Kapazitätserweiterung aufzuteilen, und es nach der Aufteilung mindestens zwei Metadatenpartitionsuntergruppen gibt.

7. Vorrichtung nach Anspruch 5 oder 6, wobei das Aufteilungsmodul ferner dazu ausgelegt ist: nachdem die erste Metadatenpartitionsuntergruppe und die Metadaten, die der ersten Metadatenpartitionsuntergruppe entsprechen, zum zweiten Knoten migriert wurden, Aufteilen der Datenpartitionsgruppe in mindestens zwei Datenpartitionsuntergruppen, wobei Metadaten von Daten, die der Datenpartitionsuntergruppe entsprechen, ein Teilsatz von Metadaten sind, die einer der mindestens zwei Metadatenpartitionsuntergruppen entsprechen.

8. Vorrichtung nach einem der Ansprüche 5 bis 7, wobei das Konfigurationsmodul ferner dazu ausgelegt ist: nachdem der zweite Knoten dem Speichersystem hinzugefügt wurde, Gespeicherthalten der der Datenpartitionsgruppe entsprechenden Daten weiterhin auf dem ersten Knoten gespeichert.

9. Speichersystem, umfassend einen ersten Knoten und die Knotenerweiterungskapazitätsvorrichtung nach einem der Ansprüche 5 bis 8.

## Revendications

1. Procédé d'extension de capacité de nœud dans un système de stockage, dans lequel le système de stockage comprend un premier noeud, et le procédé comprend :
la configuration (S701) d'un groupe de partitions de données et d'un groupe de partitions de métadonnées du premier noeud, dans lequel le groupe de partitions de données comprend une pluralité de partitions de données, le groupe de partitions de métadonnées comprend une pluralité de partitions de métadonnées, dans lequel les métadonnées de données correspondant au groupe de partitions de données sont un sous-ensemble de métadonnées correspondant au groupe de partitions de métadonnées, dans lequel le procédé comprend en outre :
lorsqu'un second nœud est ajouté au système de stockage (S702), la division du groupe de partitions de métadonnées en au moins deux sous-groupes de partitions de métadonnées ; et
la migration (S703) d'un premier sous-groupe de partitions de métadonnées dans les au moins deux sous-groupes de partitions de métadonnées et des métadonnées correspondant au premier sous-groupe de partitions de métadonnées vers le second noeud, dans lequel les métadonnées des données correspondant au groupe de partitions de données sont un sous-ensemble de métadonnées correspondant à l'un quelconque des au moins deux sous-groupes de partitions de métadonnées.

2. Procédé selon la revendication 1, dans lequel avant la division du groupe de partitions de métadonnées en au moins deux sous-groupes de partitions de métadonnées, le procédé comprend en outre :
l'obtention d'une disposition de groupe de partitions de métadonnées après une extension de capacité et une disposition de groupe de partitions de métadonnées avant une extension de capacité, dans lequel
la disposition de groupe de partitions de métadonnées après une extension de capacité comprend une quantité de sous-groupes de partitions de métadonnées configurés pour chaque nœud dans le système de stockage après que le second nœud est ajouté au système de stockage, et une quantité de partitions de métadonnées comprises dans le sous-groupe de partitions de métadonnées après que le second le nœud est ajouté au système de stockage, et
la disposition de groupe de partitions de métadonnées avant une extension de capacité comprend une quantité des groupes de partitions de métadonnées configurés pour le premier nœud avant que le second nœud soit ajouté au système de stockage, et une quantité de partitions de métadonnées comprises dans les groupes de partitions de métadonnées avant que le second le nœud soit ajouté au système de stockage ; et
la division du groupe de partitions de métadonnées en au moins deux sous-groupes de partitions de métadonnées comprend :
la division du groupe de partitions de métadonnées sur la base d'une disposition de groupe de partitions de métadonnées après une extension de capacité et de la disposition de groupe de partitions de métadonnées avant une extension de capacité, dans lequel il y a au moins deux sous-groupes de partitions de métadonnées après la division.

3. Procédé selon la revendication 1 ou 2, dans lequel après la migration d'un premier sous-groupe de partitions de métadonnées et de métadonnées correspondant au premier sous-groupe de partitions de métadonnées vers le second noeud, le procédé comprend en outre :
la division du groupe de partitions de données en au moins deux sous-groupes de partitions de données, dans lequel les métadonnées de données correspondant au sous-groupe de partitions de données sont un sous-ensemble de métadonnées correspondant à l'un quelconque des au moins deux sous-groupes de partitions de métadonnées.

4. Procédé selon l'une quelconque des revendications 1 à 3, comprenant en outre :
après que le second nœud a été ajouté au système de stockage, la conservation des données correspondant au groupe de partitions de données toujours stockées sur le premier noeud.

5. Appareil d'extension de capacité de noeud, dans lequel l'appareil est situé dans un système de stockage et comprend :
un module de configuration (801), conçu pour configuer un groupe de partitions de données et un groupe de partitions de métadonnées d'un premier nœud dans le système de stockage, dans lequel le groupe de partitions de données comprend une pluralité de partitions de données, le groupe de partitions de métadonnées comprend une pluralité de partitions de métadonnées, dans lequel les métadonnées de données correspondant au groupe de partitions de données sont un sous-ensemble de métadonnées correspondant au groupe de partitions de métadonnées ; dans lequel le procédé comprend en outre :
un module de division (802), conçu pour, lorsqu'un second nœud est ajouté au système de stockage, diviser le groupe de partitions de métadonnées en au moins deux sous-groupes de partitions de métadonnées ; et
un module de migration (803), conçu pour migrer un premier sous-groupe de partitions de métadonnées dans les au moins deux sous-groupes de partitions de métadonnées et des métadonnées correspondant au premier sous-groupe de partitions de métadonnées vers le second noeud, dans lequel les métadonnées des données correspondant au groupe de partitions de données sont un sous-ensemble de métadonnées correspondant à l'un quelconque des au moins deux sous-groupes de partitions de métadonnées.

6. Appareil selon la revendication 5, comprenant en outre un module d'obtention (804), dans lequel
le module d'obtention est conçu pour obtenir une disposition de groupe de partitions de métadonnées après une extension de capacité et une disposition de groupe de partitions de métadonnées avant une extension de capacité, dans lequel la disposition de groupe de partitions de métadonnées après une extension de capacité comprend une quantité de sous-groupes de partitions de métadonnées configurés pour chaque nœud dans le système de stockage après que le second nœud est ajouté au système de stockage, et une quantité de partitions de métadonnées comprises dans le sous-groupe de partitions de métadonnées après que le second nœud est ajouté au système de stockage, et la disposition de groupe de partitions de métadonnées avant une extension de capacité comprend une quantité des groupes de partitions de métadonnées configurés pour le premier nœud avant que le second nœud soit ajouté au système de stockage, et une quantité de partitions de métadonnées comprises dans les groupes de partitions de métadonnées avant que le second nœud soit ajouté au système de stockage ; et
le module de division est spécifiquement conçu pour diviser le groupe de partitions de métadonnées sur la base d'une disposition de groupe de partitions de métadonnées après une extension de capacité et de la disposition de groupe de partitions de métadonnées avant une extension de capacité, et il y a au moins deux sous-groupes de partitions de métadonnées après la division.

7. Appareil selon la revendication 5 ou 6, dans lequel le module de division est en outre conçu pour : après la migration du premier sous-groupe de partitions de métadonnées et des métadonnées correspondant au premier sous-groupe de partitions de métadonnées vers le second noeud, diviser le groupe de partitions de données en au moins deux sous-groupes de partitions de données, dans lequel les métadonnées de données correspondant au sous-groupe de partitions de données sont un sous-ensemble de métadonnées correspondant à l'un quelconque des au moins deux sous-groupes de partitions de métadonnées.

8. Appareil selon l'une quelconque des revendications 5 à 7, dans lequel le module de configuration est en outre conçu pour : après que le second nœud est ajouté au système de stockage, conserver les données correspondant au groupe de partitions de données toujours stockées sur le premier noeud.

9. Système de stockage, comprenant un premier nœud et l'appareil de capacité d'extension de nœud selon l'une quelconque des revendications 5 à 8.
